# EUROPEAN PATENT APPLICATION

(11) **EP 2 668 991 A1**
(43) Date of publication of application: **04.12.2013**
(21) Application number: 12169749.4
(22) Date of filing: 29.05.2012
(51) Int. Cl.: B01D 46/24, B01D 46/00

(54) **Filter assembly and process for filtering syngas**

(71) Applicant: Shell Internationale Research Maatschappij B.V., 2596 HR The Hague (NL)
(72) Inventor: Zalman, Lucien, 1031 HW Amsterdam (NL)
(74) Representative: Matthezing, Robert Maarten

(57) **Abstract**

Filter assembly (1) comprising a filter house (2) with an inner chamber (6) partitioned by a main tube sheet (7) dividing the inner chamber into an inlet compartment (8) with an inlet (10) and an outlet compartment (9) with an outlet (12). The main tube sheet carries a plurality of clusters (14) of tubular filter elements (15). Each tubular filter element has a tubular body (17) extending between an open end (18) and a closed end (19). Adjacent clusters have adjacent side faces (29) which are parallel in cross section. To this end, the clusters (14) may for instance have a hexagonal cross section.

## Description

The invention pertains to a filter assembly, comprising a filter house with an inner chamber partitioned by a tube sheet separating an inlet compartment with an inlet and an outlet compartment with a filtrate outlet, wherein the main tube sheet carries a plurality of clusters of tubular filter elements defining a flow path from the inlet compartment to the outlet compartment, such as candle filters. The tubular filter elements typically have a tubular body of a porous structure extending between an open end and a closed end. The invention also relates to the use of such filter assemblies, for instance for the removal of fine ash or slag particles from a gaseous medium, such as an outlet stream of gasification reactor before the gas enters downstream processing units. Fly ash and slag particles are retained by the wall of the filter element.

Filter assemblies of this kind can be cleaned by a reverse back flow induced by a pulse of an inert gas. To this end the clusters can be capped with a tapering duct extending between a large end enclosing the open ends of the filter elements of the corresponding cluster, and a smaller open end extending into the outlet compartment. At a distance from each of the open ends of the tapering ducts, a blaster is directed to the open end of the corresponding tapering duct. The blaster can blast a pulse of an inert cleaning gas, such as nitrogen, into the tapering duct. Due to the pressure fall in the tapering duct, the high pressure pulse of cleaning gas causes filtered syngas to enter the duct, creating a pressure wave through the filter elements which results in a temporary reverse flow through the filter elements. This dislodges solids from the filter elements. The dislodged solids drop down to the bottom of the filter house.

The recovered fly ash and slag particles can either be recycled to the gasifier or discharged as a by-product.

To provide a high filter capacity in a plant a plurality of filter units is typically used in a parallel arrangement. This results in increased control complexity and significant additional expenditure of the system as a whole.

It is an object of the invention to reduce the need to use a plurality of filter assemblies in parallel arrangement.

To this end a filter assembly is disclosed comprising a filter house with an inner chamber partitioned by a main tube sheet dividing the inner chamber into an inlet compartment with an inlet and an outlet compartment with a filtrate outlet. The main tube sheet carries a plurality of clusters of tubular filter elements defining a flow path from the inlet compartment to the outlet compartment. Each tubular filter element has a tubular body extending between an open end and a closed end. In cross section adjacent clusters have parallel adjacent side faces. In this context, the expressions "cross section" and "cross sectional" refer to the cross section along a plane perpendicular to a longitudinal axis of the filter elements.

It has been found that such an arrangement of filter elements enables a substantial increase of the filter capacity of the clusters relative to their size. A higher density of filter elements can be realized without changing the centre-to-centre distance between the clusters or the centre-to-centre distance between the filter elements. In particular cases this may avoid the need for an auxiliary second filter assembly in parallel arrangement.

The clusters can for example have a polygonal cross section, e.g., a triangular, square or hexagonal cross section. The use of cluster with a polygonal cross section allows dense packing of the clusters within the filter assembly. Additionally, given a certain centre-to-centre distance and diameter of the filter elements, more filters can be packed within a polygonal cluster than in a cluster of a different outline, in particular a circular outline. Both effects contribute to maximization of the number of filter elements carried by a single main tube sheet, particularly a circular main tube sheet. Hence, the ratio between the number of filter elements and the required diameter of the main tube sheet increases, resulting in a reduction of the required size of the filter house or pressure vessel.

To enable cleaning by a reverse back flow through the filter elements, the clusters can for instance be capped with a tapering duct extending between a large end enclosing the open ends of the filter elements of the corresponding cluster, and a smaller open end extending into the outlet compartment, wherein at a distance from each of the open ends of the tapering ducts, a blaster is directed to the open end of the corresponding tapering duct. The larger open ends of the tapering ducts can have an outline corresponding to the cross sectional shape of the corresponding clusters. For instance, the larger open ends of the tapering ducts and the clusters can have concentric polygonal, e.g., hexagonal outlines. In an exemplary embodiment, the cross sectional outline of the tapering ducts gradually changes from hexagonal at the larger end to cylindrical at the smaller top ends.

The main tube sheet can be provided with openings, wherein a secondary tube sheet carrying a cluster of tubular filter elements is suspended in each of said openings. This allows installing and removal of the clusters as subassemblies, allowing easier maintenance outside the filter vessel. The secondary tube sheets, the openings in the main tube sheet, and the clusters may have concentric polygonal, e.g., hexagonal outlines.

In a specific embodiment, all clusters are equally sized and shaped. In case of hexagonal clusters, this results in a regular honeycomb structure.

In a specific embodiment, each cluster may for example comprise more than 50 filter elements per m². In a further specific embodiment, the filter elements within the clusters can be equally sized and equidistantly arranged with a centre-to-centre distance of at least 1,5 times the filter element diameter. For example, the centre-to-centre distance can be at least 100 mm.

The filter assembly may comprise any suitable number of clusters. In a specific embodiment, e.g. for a filter assembly for filtering synthetic gas discharged by a gasifier, may comprise more than 45 clusters.

In a further specific embodiment, particularly for a filter assembly for filtering synthetic gas discharged by a gasifier, the filter assembly may be provided with an inlet and a filtrate outlet having a flow capacity of at least 5 m³/sec.

The width of the gaps between adjacent clusters can for instance be about 200 mm or less. Larger gaps can also be used if so desired.

The filter elements comprise a tubular wall, e.g., of a porous material, which may for instance be ceramic and/or metallic.

The tubular body of the filter element typically extends between an open end in open communication with the outlet compartment, and a closed end extending into the inlet compartment. The open end of the filter element can be connected to the tube sheet in line with one of the openings. The opposite end of the filter is closed. The filter elements will generally have a circular cross section. Optionally, the filter elements may have a polygonal cross section, such as a triangular, square or hexagonal cross section, to enable dense packing of the filter elements.

The disclosed filter assemblies are particularly suitable for filtering syngas formed by the partial combustion of a carbonaceous feed, such as oil, carbon or biomass.

Exemplary embodiments will be further described with reference to the accompanying drawings. In the drawings:
- Figure 1:: shows schematically a longitudinal cross section of an exemplary embodiment of a filter assembly;
- Figure 2:: shows schematically a longitudinal cross section of a cluster of filter elements of the assembly in Figure 1;
- Figure 3:: shows in perspective view a main tube sheet carrying clusters of filter elements of the filter assembly of Figure 1;
- Figure 4:: shows the main tube sheet of Figure 3 in bottom view.

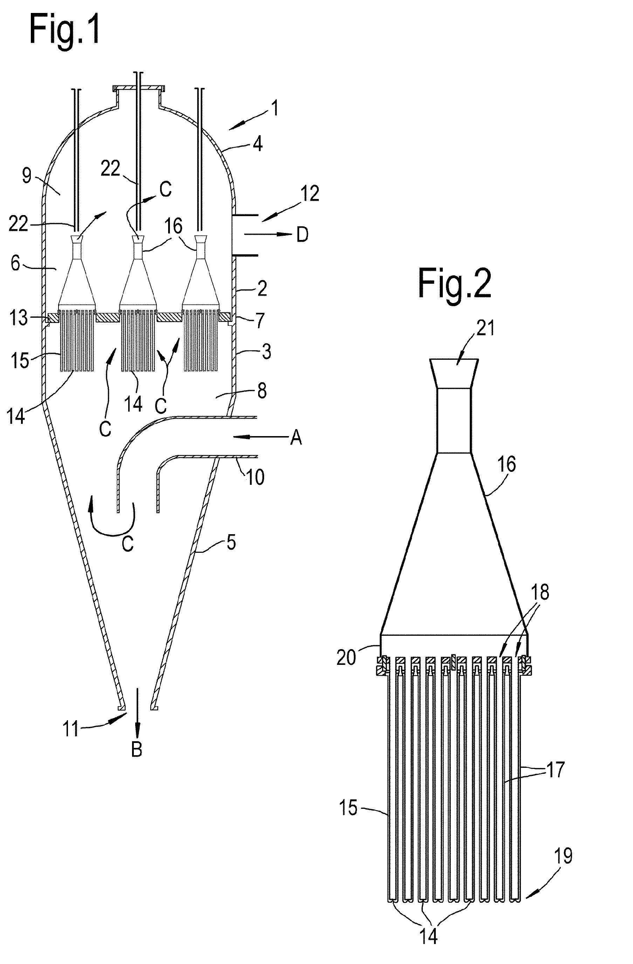

Figure 1 shows a filter assembly 1 in a longitudinal cross section. The filter assembly 1 comprises a filter house 2, typically formed of a cylindrical body 3 capped with a semispherical top 4. The shown embodiment comprises a conical lower section 5 narrowing down in downward direction.

The filter house 2 encloses an inner chamber 6 partitioned by a main tube sheet 7 which divides the inner chamber 6 into an inlet compartment 8 and an outlet compartment 9. The inlet compartment 8 is provided with an inlet 10 for dust loaded gas, and an outlet 11 for filtered dust. The outlet compartment 9 is provided with an outlet 12 for filtered gas.

The main tube sheet 7 rests on a shoulder 13 at the inside of the filter house 2. The main tube sheet 7 carries a plurality of clusters 14 of tubular filter elements 15. Each cluster 14 is capped with a tapering duct 16. A single cluster 14 with a tapering duct 16 is shown schematically in Figure 2.

Each tubular filter element 15 has a tubular body 17 with an open end 18 in open communication with the outlet compartment 9, and a closed end 19 extending into the inlet compartment 8. Such filter elements 15 are generally referred to as candle filters. The open ends 18 of the filter elements 15 are located at the level of the main tube sheet 7.

The tapering duct 16 comprises a larger end 20 enclosing the open ends 18 of the filter elements 15 of the corresponding cluster 14, and a smaller open end 21 extending into the outlet compartment 9.

Referring back to Figure 1, blasters 22 are directed to the smaller open ends 21 at a distance above these smaller open ends 21 of the tapering ducts 16.

In use, dust loaded gas flows into the inlet compartment 8 of the filter assembly 1 via inlet 10 in the direction of arrow A. In the inlet compartment 8 the inlet 10 is provided with a downwardly pointing end piece, which is coaxially arranged in relation to the filter house 2. This way the heavier dust particles tend to swirl down towards the dust outlet 11 in the direction of arrow B, while the rest of the dust loaded gas flows upwardly via the filter elements 15 and the tapering ducts 16 into the outlet compartment 9 (arrows C). The filtered gas is discharged via gas outlet 12 (arrow D). The filter elements filter the passing gas and retain solid contaminants.

The filter elements 15 can be cleaned by a back flow. To this end, the blasters 22 can blast a cleaning gas via the tapered ducts 16 into the filter elements 15 in a direction opposite to arrows C. The cleaning gas is forced to pass the walls of the filter elements 15, blowing away the retained fly ash particles which subsequently fall down to be discharged via the dust outlet 11.

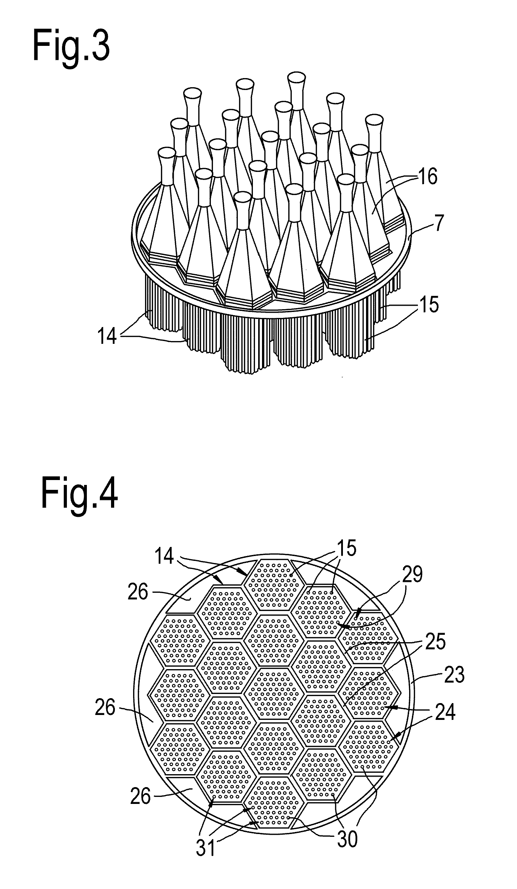

Figure 3 shows in perspective view the main tube sheet 7 carrying the clusters 14 and the tapering ducts 16. Referring to Figure 4, the main tube sheet 7 comprises a circular outer rim 23 and a plurality of hexagonal openings 24 bordered by hexagonal rims 25. The hexagonal openings 24 are arranged side by side in a dense packing to form a honeycomb structure. Spaces 26 between the hexagonal rims and the outer circular rim 23 are closed off, e.g., by a sheet metal.

Each cluster 14 is carried by a hexagonal secondary tube sheet 30. The secondary tube sheet 30 rests on a hexagonal rim 25 of the main tube sheet 7 and comprises openings 31 for carrying the individual tubular filter elements 15. The openings 31 are arranged in a hexagonal pattern. This way the tubular filter elements 15 form hexagonal clusters 14 with adjacent clusters 14 having parallel adjacent side faces 29.

In the shown exemplary embodiment the openings 31 are circular. Other configurations can be used as well, if so desired.

## Claims

1. Filter assembly (1) comprising a filter house (2) with an inner chamber (6) partitioned by a main tube sheet (7) dividing the inner chamber into an inlet compartment (8) with an inlet (10) and an outlet compartment (9) with an outlet (12),
- wherein the main tube sheet carries a plurality of clusters (14) of tubular filter elements (15) defining a flow path from the inlet compartment to the outlet compartment,
- each tubular filter element having a tubular body (17) extending between an open end (18) and a closed end (19),
- wherein adjacent clusters have adjacent side faces (29) which are parallel in cross section.

2. A filter assembly according to claim 1 wherein at least a part of the clusters (14) have a hexagonal cross section.

3. A filter assembly according to any one of the preceding claims wherein each cluster (14) is capped with a tapering duct (16) extending between a large end (20) enclosing the open ends of the filter elements of the corresponding cluster, and a smaller open end (21) extending into the outlet compartment; and wherein at a distance from each of the open ends of the tapering ducts, a blaster (22) is directed to the open end of the corresponding tapering duct.

4. A filter assembly according to claim 3 wherein the larger open ends of the tapering ducts (16) have an outline corresponding to the cross sectional shape of the corresponding clusters (14).

5. A filter assembly according to any one of the preceding claims wherein the main tube sheet (7) is provided with openings (24), wherein a secondary tube sheet (30) carrying a cluster (14) of tubular filter elements (15) is suspended in each of said openings.

6. A filter assembly according to claim 5, wherein the openings in the main tube sheet (7), the secondary tube sheets (30) and the clusters (14) have concentric hexagonal outlines.

7. Filter assembly according to any one of the preceding claims wherein all clusters (14) are equally sized and shaped.

8. Filter assembly according to any one of the preceding claims wherein each cluster (14) comprises more than 50 filter elements per m².

9. Filter assembly according to any one of the preceding claims wherein the filter elements (15) within at least one of the clusters are equally sized and equidistantly arranged with a centre-to-centre distance of at least 1,5 times the filter element diameter.

10. Filter assembly according to claim 9 wherein the centre-to-centre distance is at least 100 mm.

11. Filter assembly according to any one of the preceding claims and comprising more than 45 clusters (14).

12. Filter assembly according to any one of the preceding claims wherein the width of the gaps between the facing side faces (29) of adjacent clusters (14) is constant and is 200 mm or less.

13. Process for filtering syngas formed by the partial combustion of a carbonaceous feed, using a filter assembly according to any one of the preceding claims.
